# EUROPEAN PATENT SPECIFICATION

(11) **EP 4 454 802 B1**
(45) Date of publication and mention of the grant of the patent: **04.03.2026**
(21) Application number: 24171532.5
(22) Date of filing: 22.04.2024
(51) Int. Cl.: B23K 26/21, B23K 26/342, B23K 26/70

(54) **AUTOMATIC STABILITY CONTROL OF POWER LEVEL FOR A HOT WIRE LASER PROCESS**
AUTOMATISCHE STABILITÄTSREGELUNG DES LEISTUNGSPEGELS FÜR EIN HEISSDRAHTLASERVERFAHREN
COMMANDE DE STABILITÉ AUTOMATIQUE DU NIVEAU DE PUISSANCE POUR UN PROCESSUS LASER À FIL CHAUD

(30) Priority: 25.04.2023 US 202363461636 P; 28.12.2023 US 202318398463
(43) Date of publication of application: 30.10.2024
(73) Proprietor: Lincoln Global, Inc., Cleveland, OH 44117 (US)
(72) Inventor: ASH, Elliott R., Bay Village, 44140 (US); HENRY, Judah B., Painesville, 44077 (US); PETERS, Steven R., Huntsburg, 44046 (US)
(74) Representative: Hoyng Rokh Monegier B.V.

(56) References cited:
- WO-A1-2015/125002
- DE-A1- 3 905 684

## Description

### FIELD

Embodiments of the present invention relate to the use of hot wire systems (e.g., laser hot wire systems) for example, for welding, cladding, or additive manufacturing. More specifically, embodiments of the present invention relate to a hot wire mode that automatically tunes in the electrical power or energy level to the filler wire to mitigate arcing of the filler wire during a hot wire process.

### BACKGROUND

In a laser hot wire process (see WO2015/125002), arcing of the filler wire is undesirable and can lead to undesirable results when, for example, welding, cladding, or additively manufacturing. The level of electrical power or energy being input to the filler wire in a laser hot wire process affects the amount or frequency of arcing between the filler wire and the work piece. Typically, the higher the power or energy, the more that arcing occurs. Traditionally, the level of energy or power to be input to the filler wire is determined through experimentation and is manually set or selected by a user. The set or selected level of energy or power is fixed and does not change during the laser hot wire process. However, such an unchanging level of energy or power into the filler wire may not account for other changing aspects during the laser hot wire process and lead to increased arcing.

### SUMMARY

A method of mitigating arcing events in a hot wire process is provided. The method includes monitoring an arcing frequency of a hot wire process. The method also includes monitoring at least one of an energy, a power, a deposition amount, or a deposition rate of the hot wire process. The method further includes adjusting at least one of a hot wire current, a hot wire voltage, a hot wire waveform characteristic, a wire feed speed, a wire approach angle, or a contact tip-to-work distance of the hot wire process to balance the arcing frequency against at least one of the energy, the power, the deposition amount, or the deposition rate of the hot wire process, where it is desirable for the arcing frequency to be low, and where it is also desirable for the energy, the power, the deposition amount, or the deposition rate to be high.

One embodiment includes a method of mitigating arcing events in a hot wire process provided by a hot wire system. The method includes automatically monitoring a frequency of arcing of a filler wire during a hot wire process in real time. The method also includes automatically monitoring at least one of an energy or a power during the hot wire process in real time. The method further includes automatically adjusting at least one of a hot wire current, a hot wire voltage, a hot wire waveform characteristic, a wire feed speed, a wire approach angle, or a contact tip-to-work distance of the hot wire process, in response to automatically monitoring the frequency of arcing and at least one of the energy or the power, to balance the frequency of arcing against at least one of the energy or the power of the hot wire process. In one embodiment, balancing the frequency of arcing against at least one of the energy or the power of the hot wire process includes keeping the frequency of arcing below a first threshold value while keeping the energy or the power above a second threshold value. In one embodiment, the monitoring of the frequency of arcing includes sensing at least one of a voltage or a current of the hot wire process between the filler wire and a workpiece. In one embodiment, the monitoring of the energy or the power of the hot wire process includes sensing both a voltage and a current of the hot wire process between the filler wire and a workpiece. In one embodiment, the adjusting employs a control algorithm, trained using machine learning techniques, and having inputs of the frequency of arcing and at least one of the energy or the power, as monitored, and having outputs of at least one of the hot wire current, the hot wire voltage, the hot wire waveform characteristic, the wire feed speed, the wire approach angle, or the contact tip-to-work distance. The inputs may further include at least one of a wire type of the filler wire, a wire diameter of the filler wire, a material type of a workpiece, and a material thickness of the workpiece. In one embodiment, the adjusting employs a control algorithm, trained using artificial intelligence techniques, and having inputs of the frequency of arcing and at least one of the energy or the power, as monitored, and having outputs of at least one of the hot wire current, the hot wire voltage, the hot wire waveform characteristic, the wire feed speed, the wire approach angle, or the contact tip-to-work distance. The inputs may further include at least one of a wire type of the filler wire, a wire diameter of the filler wire, a material type of a workpiece, and a material thickness of the workpiece. In one embodiment, the method also includes providing a visual indicator to a user based on the frequency of arcing to indicate to the user when the filler wire is in a correct location within the weld pool. In one embodiment, the frequency of arcing is kept between 0.5 Hz and 20 Hz during the hot wire process.

One embodiment includes a method of mitigating arcing events in a hot wire process provided by a hot wire system. The method includes automatically monitoring a frequency of arcing of a filler wire during a hot wire process in real time. The method also includes automatically monitoring at least one of a deposition amount or a deposition rate during the hot wire process in real time. The method further includes automatically adjusting at least one of a hot wire current, a hot wire voltage, a hot wire waveform characteristic, a wire feed speed, a wire approach angle, or a contact tip-to-work distance of the hot wire process, in response to automatically monitoring the frequency of arcing and at least one of the deposition amount or the deposition rate, to balance the frequency of arcing against at least one of the deposition amount or the deposition rate of the hot wire process. In one embodiment, balancing the frequency of arcing against at least one of the deposition amount or the deposition rate of the hot wire process includes keeping the frequency of arcing below a first threshold value while keeping the deposition amount or the deposition rate above a second threshold value. In one embodiment, the monitoring of the frequency of arcing includes sensing at least one of a voltage or a current of the hot wire process between the filler wire and a workpiece. In one embodiment, the monitoring of the deposition amount or the deposition rate of the hot wire process includes keeping track of an arc time of the filler wire and the wire feed speed during the hot wire process. In one embodiment, the adjusting employs a control algorithm, trained using machine learning techniques, and having inputs of the frequency of arcing and at least one of the deposition amount or the deposition rate, as monitored, and having outputs of at least one of the hot wire current, the hot wire voltage, the hot wire waveform characteristic, the wire feed speed, the wire approach angle, or the contact tip-to-work distance. The inputs may further include at least one of a wire type of the filler wire, a wire diameter of the filler wire, a material type of a workpiece, and a material thickness of the workpiece. In one embodiment, the adjusting employs a control algorithm, trained using artificial intelligence techniques, and having inputs of the frequency of arcing and at least one of the deposition amount or the deposition rate, as monitored, and having outputs of at least one of the hot wire current, the hot wire voltage, the hot wire waveform characteristic, the wire feed speed, the wire approach angle, or the contact tip-to-work distance. The inputs may further include at least one of a wire type of the filler wire, a wire diameter of the filler wire, a material type of a workpiece, and a material thickness of the workpiece. In one embodiment, the method also includes providing a visual indicator to a user based on the frequency of arcing to indicate to the user when the filler wire is in a correct location within the weld pool. In one embodiment, the frequency of arcing is kept between 0.5 Hz and 20 Hz during the hot wire process.

Numerous aspects of the general inventive concepts will become readily apparent from the following detailed description of exemplary embodiments, from the claims, and from the accompanying drawings.

### BRIEF DESCRIPTION OF THE DRAWINGS

The accompanying drawings, which are incorporated in and constitute a part of the specification, illustrate various embodiments of the disclosure. It will be appreciated that the illustrated element boundaries (e.g., boxes, groups of boxes, or other shapes) in the figures represent one embodiment of boundaries. In some embodiments, one element may be designed as multiple elements or multiple elements may be designed as one element. In some embodiments, an element shown as an internal component of another element may be implemented as an external component and vice versa. Furthermore, elements may not be drawn to scale.
FIG. 1 illustrates one embodiment of a functional schematic block diagram of an exemplary embodiment of a hot wire system for a hot wire process;
FIG. 2 illustrates a block diagram of an example embodiment of a controller that can be used, for example, in the system of FIG. 1;
FIG. 3 illustrates one embodiment of a hot wire laser mode that automatically tunes in the power level so that arcing of the filler wire is mitigated while processing;
FIG. 4 illustrates a schematic block diagram of one embodiment of a control algorithm having multiple inputs and multiple outputs;
FIG. 5 illustrates a flow chart of one embodiment of a method of mitigating arcing events in a hot wire process provided by a hot wire system; and
FIG. 6 illustrates a flow chart of another embodiment of a method of mitigating arcing events in a hot wire process provided by a hot wire system.

### DETAILED DESCRIPTION

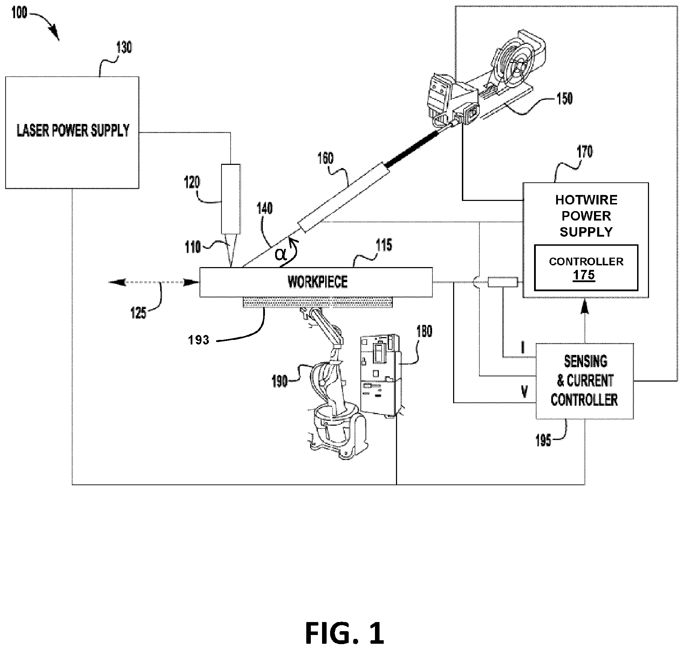

The examples and figures herein are illustrative only and are not meant to limit the subject invention, which is measured by the scope of the claims. Referring now to the drawings, wherein the showings are for the purpose of illustrating exemplary embodiments of the subject invention only and not for the purpose of limiting same, FIG. 1 illustrates one embodiment of a functional schematic block diagram of an exemplary embodiment of a hot wire system 100 (e.g., a combination filler wire feeder and energy source system) for a hot wire process. In one embodiment, FIG. 1 illustrates an embodiment of a laser hot wire (LHW) additive manufacturing system.

The system 100 includes a laser subsystem capable of focusing a laser beam 110 onto a workpiece or part 115 to heat the workpiece or part 115. The laser subsystem is a high intensity energy source. The laser subsystem can be any type of high energy laser source, including but not limited to carbon dioxide, Nd:YAG, Yb-disk, YB-fiber, fiber delivered, or direct diode laser systems. Other embodiments of the system may include at least one of an electron beam, a plasma arc welding subsystem, a gas tungsten arc welding subsystem, a gas metal arc welding subsystem, a flux cored arc welding subsystem, or a submerged arc welding subsystem serving as the high intensity energy source. In accordance with another embodiment, a portion of the elements of the system 100 may be configured as a blown powder system.

The following will repeatedly refer to the laser system, the beam, and the power supply. However, it should be understood that this reference is exemplary, as any high intensity energy source may be used. For example, a high intensity energy source can provide at least 500 W/cm². The laser subsystem includes a laser device 120 and a laser power supply 130 operatively connected to each other. The laser power supply 130 provides power to operate the laser device 120.

The system 100 also includes a hot filler wire feeder subsystem capable of providing at least one resistive filler wire 140 to make contact with the workpiece or part 115 in the vicinity of the laser beam 110. Of course, it is understood that by reference to the workpiece or part 115 herein, the molten puddle is considered part of the workpiece or part 115, thus reference to contact with the workpiece or part 115 includes contact with the puddle. The wire feeder subsystem includes a filler wire feeder 150, a contact tube 160, and a hot wire power supply 170. In one embodiment, the filler wire feeder 150 includes highly responsive servo motors that can be controlled to quickly change the feeding direction (forward or backward) and wire feed speed (WFS). In one embodiment, the hot wire power supply 170 includes a controller 175 which controls certain aspects of the hot wire process as discussed later herein.

During operation, the filler wire 140 is resistance-heated by electrical current from the hot wire power supply 170 which is operatively connected between the contact tube 160 and the workpiece or part 115. In accordance with one embodiment, the power supply 170 is a pulsed direct current (DC) power supply, although alternating current (AC) or other types of power supplies are possible as well. The wire 140 is fed from the filler wire feeder 150 through the contact tube 160 toward the workpiece or part 115 and extends beyond the tube 160. The extension portion of the wire 140 is resistance-heated such that the extension portion approaches or reaches the melting point before contacting a puddle on the workpiece or part. The laser beam 110 serves to melt some of the base metal of the workpiece or part 115 to form a puddle and can also be used to melt the wire 140 onto the workpiece or part 115. The power supply 170 provides energy (power) needed to resistance-melt the filler wire 140. In some embodiments the power supply 170 provides all of the energy needed while in other embodiments the laser or other high energy heat source can provide some of the energy. The feeder subsystem may be capable of simultaneously providing one or more wires, in accordance with certain other embodiments of the present invention.

In one embodiment, the system 100 further includes a motion control subsystem capable of moving the laser beam 110 (energy source) and the resistive filler wire 140 in a same direction 125 along the workpiece or part 115 (at least in a relative sense) such that the laser beam 110 and the resistive filler wire 140 remain in a fixed relation to each other. According to various embodiments, the relative motion between the workpiece or part 115 and the laser/wire combination may be achieved by actually moving the workpiece or part 115 or by moving the laser device 120 and the wire feeder subsystem. In FIG. 1, the motion control subsystem includes a motion controller 180 operatively connected to a robot 190 having a platform 193 (e.g., a rotatable platform and/or a translatable platform). The motion controller 180 controls the motion of the robot 190. The robot 190 is operatively connected (e.g., mechanically secured) to the workpiece or part 115 via the platform 193 to move the workpiece or part 115 in the direction 125 such that the laser beam 110 and the wire 140 effectively travel along the workpiece or part 115. In accordance with an alternative embodiment of the present invention, the laser device 110 and the contact tube 160 may be integrated into a single head. The head may be moved along the workpiece or part 115 via a motion control subsystem operatively connected to the head. In some embodiments, the motion controller 180 is programmed to control the robot 190 such that the platform 193 may be rotated 90° and/or translated in a direction that is perpendicular to the direction of travel 125.

In general, there are several methods in which a high intensity energy source/wire may be moved relative to a workpiece or part. If the workpiece or part is round, for example, the high intensity energy source/wire may be stationary and the workpiece or part may be rotated under the high intensity energy source/wire. Alternatively, a robot arm or linear tractor may move parallel to the round workpiece or part and, as the workpiece or part is rotated, the high intensity energy source/wire may move continuously or index once per revolution to, for example, overlay the surface of the round workpiece or part. If the workpiece or part is flat or at least not round, the workpiece or part may be moved under the high intensity energy source/wire as shown in FIG. 1. However, a robot arm or linear tractor or even a beam-mounted carriage may be used to move a high intensity energy source/wire head relative to the workpiece or part. The robot 190 driving the platform 193 may be driven electrically, pneumatically, or hydraulically, in accordance with various embodiments.

The system 100 further includes a sensing and current control subsystem 195 which is operatively connected to the workpiece or part 115 and the contact tube 160 (i.e., effectively connected to the output of the power supply 170) and is capable of measuring a potential difference (i.e., a voltage V) between and a current (I) through the workpiece or part 115 and the wire 140. The sensing and current control subsystem 195 may further be capable of calculating a resistance value (R=V/I) and/or a power value (P=V*I) from the measured voltage and current. In general, when the wire 140 is in contact with the workpiece or part 115, the potential difference between the wire 140 and the workpiece or part 115 is zero volts or very nearly zero volts. As a result, the sensing and current control subsystem 195 is capable of sensing when the resistive filler wire 140 is in contact with the workpiece or part 115 and is operatively connected to the power supply 170 to be further capable of controlling the flow of current through the resistive filler wire 140 in response to the sensing. In accordance with another embodiment, the sensing and current controller 195 may be an integral part of the power supply 170.

In accordance with one embodiment, the motion controller 180 may further be operatively connected to the laser power supply 130 and/or the sensing and current controller 195. In this manner, the motion controller 180 and the laser power supply 130 may communicate with each other such that the laser power supply 130 knows when the workpiece or part 115 is moving and such that the motion controller 180 knows if the laser device 120 is active. Similarly, in this manner, the motion controller 180 and the sensing and current controller 195 may communicate with each other such that the sensing and current controller 195 knows when the workpiece or part 115 is moving and such that the motion controller 180 knows if the filler wire feeder subsystem is active. Such communications may be used to coordinate activities between the various subsystems of the system 100.

In one embodiment, the system 100 is an additive manufacturing system, where the wire 140 is repeatedly melted, in droplets, and deposited onto the workpiece to create the desired shape. A surface of the workpiece or part is irradiated by the laser beam 110 (or other heat source) while the wire 140 is not in contact with the workpiece or part. The beam 110 creates a molten puddle on the surface of the workpiece or part. In most applications the puddle has a small area and the level of penetration is not that which would be required for other operations, such as welding or joining. Rather, the puddle is created so as to prepare the surface of the workpiece or part to receive and cause sufficient bonding with a droplet from the wire 140. Thus, the beam density of the beam 110 is to be such that only a small puddle is created on the workpiece or part, without causing too much heat input into the workpiece or part, or to create too large of a puddle. Upon creation of the puddle, a droplet is formed on the distal end of the wire 140 as the wire is advanced to the puddle so as to make contact with the puddle. After contact, the droplet is deposited onto the puddle and workpiece or part. This process is repeated so as to create a desired workpiece or part. For the deposited result of the process to be acceptable, it is desirable to mitigate arcing between the tip of the wire 140 and the workpiece 115 while maintaining an adequate level of deposition of molten metal from the wire 140. That is, it is desirable to balance arcing (which is ideally zero) and deposition (which is ideally maximized).

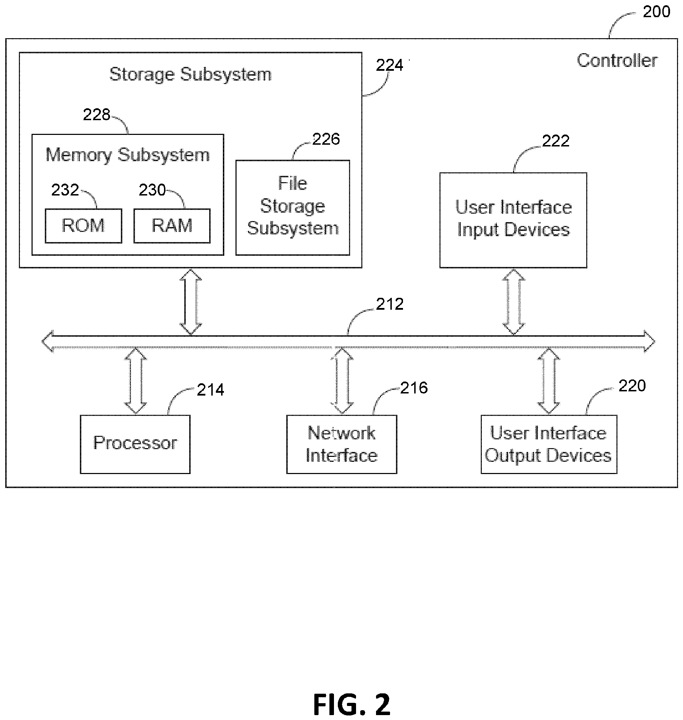

FIG. 2 illustrates a block diagram of an example embodiment of a controller 200 that can be used, for example, in the system 100 of FIG. 1. For example, the controller 200 may be used as the motion controller 180, as a controller in the welding power supply 310, and/or as the controller 175 in the hotwire power supply 170. Referring to FIG. 2, the controller 200 includes at least one processor 214 (e.g., a microprocessor, a central processing unit, a graphics processing unit) which communicates with a number of peripheral devices via bus subsystem 212. These peripheral devices may include a storage subsystem 224, including, for example, a memory subsystem 228 and a file storage subsystem 226, user interface input devices 222, user interface output devices 220, and a network interface subsystem 216. The input and output devices allow user interaction with the controller 200. Network interface subsystem 216 provides an interface to outside networks and is coupled to corresponding interface devices in other devices.

User interface input devices 222 may include a keyboard, pointing devices such as a mouse, trackball, touchpad, or graphics tablet, a scanner, a touchscreen incorporated into the display, audio input devices such as voice recognition systems, microphones, and/or other types of input devices. In general, use of the term "input device" is intended to include all possible types of devices and ways to input information into the controller 200 or onto a communication network.

User interface output devices 220 may include a display subsystem, a printer, or non-visual displays such as audio output devices. The display subsystem may include a cathode ray tube (CRT), a flat-panel device such as a liquid crystal display (LCD), a projection device, or some other mechanism for creating a visible image. The display subsystem may also provide non-visual display such as via audio output devices. In general, use of the term "output device" is intended to include all possible types of devices and ways to output information from the controller 200 to the user or to another machine or computer system.

Storage subsystem 224 stores programming and data constructs that provide some or all of the functionality described herein. For example, computer-executable instructions and data are generally executed by processor 214 alone or in combination with other processors. Memory 228 used in the storage subsystem 224 can include a number of memories including a main random access memory (RAM) 230 for storage of instructions and data during program execution and a read only memory (ROM) 232 in which fixed instructions are stored. A file storage subsystem 226 can provide persistent storage for program and data files, and may include a hard disk drive, a solid state drive, a floppy disk drive along with associated removable media, a CD-ROM drive, an optical drive, or removable media cartridges. The computer-executable instructions and data implementing the functionality of certain embodiments may be stored by file storage subsystem 226 in the storage subsystem 224, or in other machines accessible by the processor(s) 214.

Bus subsystem 212 provides a mechanism for letting the various components and subsystems of the controller 200 communicate with each other as intended. Although bus subsystem 212 is shown schematically as a single bus, alternative embodiments of the bus subsystem may use multiple buses.

The controller 200 can be of varying types. Due to the ever-changing nature of computing devices and networks, the description of the controller 200 depicted in FIG. 2 is intended only as a specific example for purposes of illustrating some embodiments. Many other configurations of a controller are possible, having more or fewer components than the controller 200 depicted in FIG. 2.

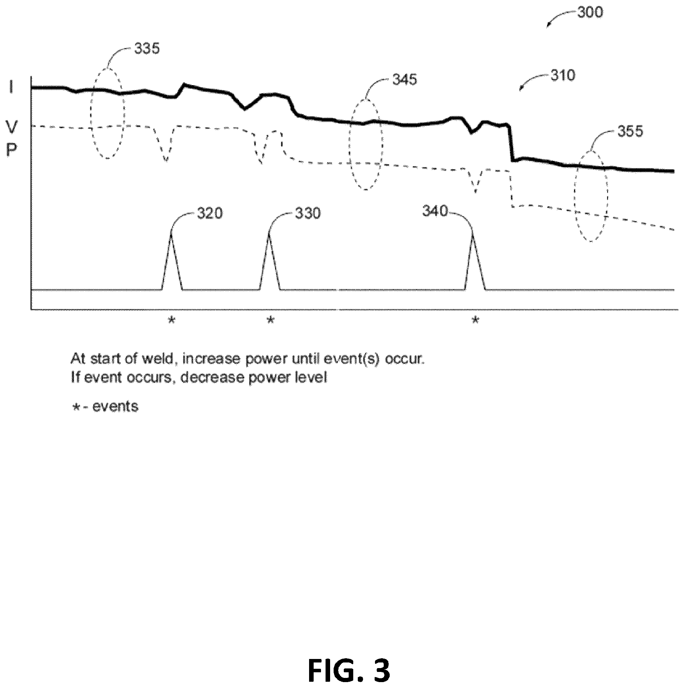

FIG. 3 illustrates one embodiment of a hot wire laser mode 300 that automatically tunes in the power level P (or energy E) so that arcing of the filler wire is mitigated while processing. The power level P may need to be tuned in for each wire type and diameter, in accordance with one embodiment. A hot wire waveform W 310 of current I and voltage V automatically adjusts the power level P upward (e.g., where P=V*I) at the start of a hot wire process until a first arcing event 320 occurs. Once the first arcing event 320 occurs, the power level P is then decreased slightly until there are no longer any arcing events.

Arcing events are detected by monitoring the voltage V and/or the current I, for example, between a filler wire and a workpiece in accordance with one embodiment. For example, a voltage level, above which it is likely that an arc is present, may be monitored. Any parameter that has voltage as a major component such as power (volts x amps) or impedance (I/V) may be used to determine the presence or absence of an arc. A change in voltage with respect to time T and any other similar parameters that use voltage, such as the change of power or impedance with respect to time T, may be used to determine the presence or absence of an arc. When a short circuit breaks into an arc, there is a very large change in voltage and all of the parameters that have a voltage term in them will also experience a fast change. Other means of detecting arcing events are possible as well, in accordance with other embodiments. Power P and/or Energy E may be determined by monitoring hot wire voltage V and hot wire current I over time T. Other means of determining power P and energy E into a filler wire 140 are possible as well, in accordance with other embodiments.

For example, FIG. 3 shows the first and second arcing events 320 and 330 at a first power level 335, a third arcing event 340 at a lower power level 345, and no arcing events at a still lower power level 355. This ensures that the wire is right on the edge of breaking into an arc and is at the hottest point it can be prior to entering the laser spot. In an alternative embodiment, once the arcing event 320 occurs, the power level P is then decreased slightly in a similar manner until the frequency of occurrence of the arcing events reduces to an acceptable level (e.g., 0.5-20 Hz). In these ways, an acceptably high power level P can be provided into the filler wire to maximize deposition while mitigating arcing. In one embodiment, the power level P may be tuned only at the beginning of the hot wire process. In another embodiment, the power level P may be continuously tuned throughout the hot wire process. In one embodiment, a rough balance or ratio is maintained between the power delivered to the filler wire and the mass of wire being added (i.e., the deposition). The starting point of the rough balance or ratio may depend on the characteristics of the filler wire, for example.

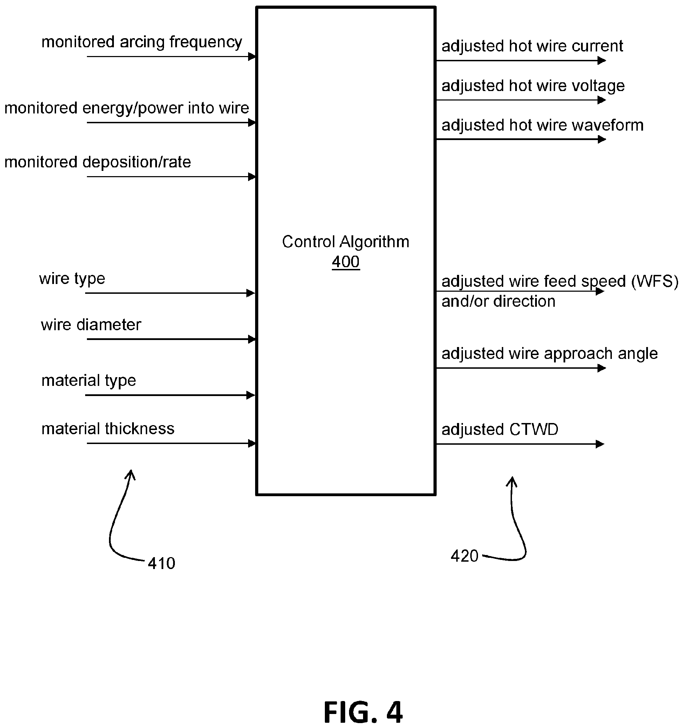

FIG. 4 illustrates a schematic block diagram of a control algorithm 400 having multiple inputs 410 and multiple outputs 420. The control algorithm 400 may reside, for example, as computer-executable instructions within the controller 175 of the hotwire power supply 170 of the system 100, in accordance with one embodiment. In other embodiments, the control algorithm 400 may reside as computer-executable instructions elsewhere within the system 100.

In accordance with one embodiment, one set of the inputs 410 to the control algorithm 400 include a wire type, a wire diameter, a material type, and a material thickness of the current hot wire process. The wire type and the wire diameter refer to the filler wire 140 of the hot wire process. The material type and the material thickness refer to the workpiece 115. These inputs are set before a particular hot wire process begins and do not change during the particular hot wire process. Another set of the inputs 410 to the control algorithm 400 include a monitored arcing frequency (frequency of occurrence of arcing events in Hz, for example), a monitored energy or power into the filler wire 140 (e.g., P=V*I), and a monitored deposition or deposition rate of the filler wire. The arcing frequency and the energy or power into the filler wire 140 are monitored continuously in real time via the sensing and current controller 195 and are derived from the sensed hot wire voltage V and the sensed hot wire current I, in accordance with one embodiment. In one embodiment, deposition or deposition rate (or relative deposition or deposition rate) can be determined by, at least in part, the arc time and the wire feed speed of the filler wire during the hot wire process. The arc time is the amount of time over which the filler wire is arcing at the work piece. Other ways of determining deposition or deposition rate are possible as well, in accordance with other embodiments.

In accordance with one embodiment, the outputs 420 of the control algorithm 400 include adjusted output commands (i.e. adjusted based on the inputs). The adjusted output commands include commands for hot wire current I, hot wire voltage V, hot wire waveform characteristics W (e.g., peak voltage, background current, pulse frequency, duty cycle, trim), hot wire feed speed (WFS) and/or wire direction (forward/backward), hot wire approach angle α, and hot wire contact tip-to-work distance (CTWD). These output commands tell (via the controller 175) the hot wire power supply 170, the filler wire feeder 150, and/or the robot controller 180 how to adjust the various parameters of the hot wire power supply 170, the filler wire feeder 150, and/or the robot 190 in real time.

During the hot wire process, as the monitored arcing frequency, the monitored energy/power, and/or the monitored deposition change in real time, one or more of the output commands 420 are adjusted by the control algorithm 400 to minimize the arcing frequency and maximize the energy/power (and/or deposition/rate) of the filler wire 140. That is, the idea is to balance the arcing frequency against at least one of the energy, the power, the deposition amount, or the deposition rate of the hot wire process. In accordance with one embodiment, the control algorithm 400 is trained (e.g., using machine learning (ML) and/or artificial intelligent (AI) techniques) to adjust the output commands 420 based on the inputs 410 to minimize the arcing frequency while maximizing the energy/power (and/or deposition) of the filler wire 140 during the hot wire process. In this manner, the arcing frequency is kept at an acceptably low level and the energy/power (and/or deposition) of the filler wire 140 is kept at an acceptably high level.

In one embodiment, the hot wire power supply affects the adjustment of the hot wire current I, the hot wire voltage V, and the hot wire waveform characteristics W in response to the associated output commands from the control algorithm 400. In one embodiment, the filler wire feeder 150 affects the adjustment of the wire feed speed WFS/direction in response to the associated output commands from the control algorithm 400. In one embodiment, the filler wire feeder 150 and/or the robot 190 affect the adjustment of the wire approach angle α and the CTWD in response to the associated output commands from the control algorithm 400.

As the wire moves out of the weld pool, the arcing frequency tends to increase quickly. In accordance with one embodiment, a "green, yellow, or red" color visual indicator is provided to the user, based on arcing frequency, which helps the user determine if the wire is in the correct location in the weld pool. "Green" may indicate an arcing frequency of 0 to 5 Hz, "yellow" may indicate an arcing frequency of 6 to 40 Hz, and "red" may indicate an arcing frequency above 40 Hz, in accordance with one embodiment.

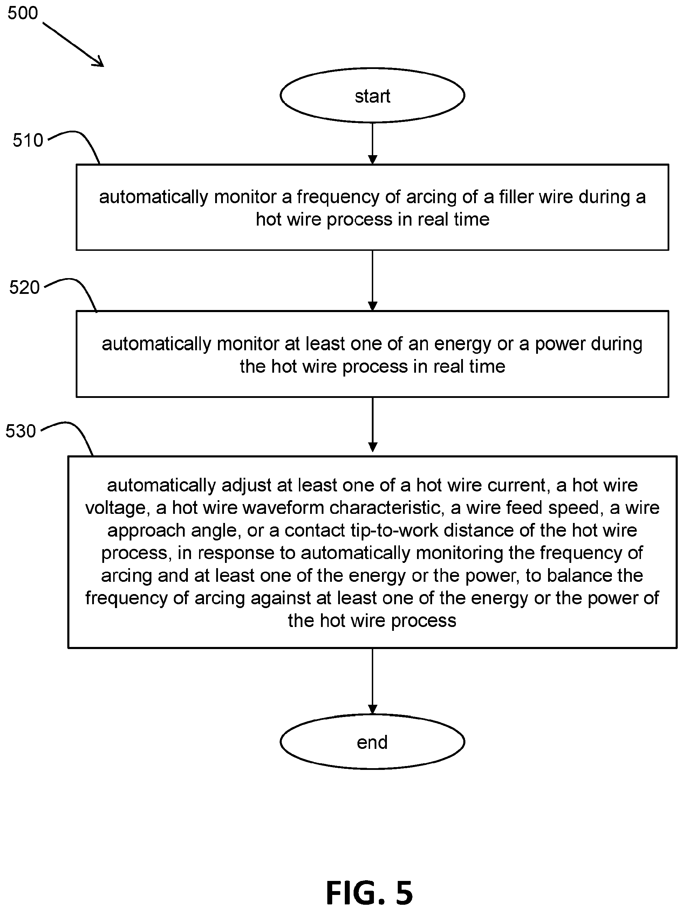

FIG. 5 illustrates a flow chart of one embodiment of a method 500 of mitigating arcing events in a hot wire process provided by a hot wire system. At block 510, the method 500 includes automatically monitoring a frequency of arcing of a filler wire during a hot wire process in real time. At block 520, the method 500 includes automatically monitoring at least one of an energy or a power during the hot wire process in real time. At block 530, the method 500 includes automatically adjusting at least one of a hot wire current, a hot wire voltage, a hot wire waveform characteristic, a wire feed speed, a wire approach angle, or a contact tip-to-work distance of the hot wire process, in response to automatically monitoring the frequency of arcing and at least one of the energy or the power, to balance the frequency of arcing against at least one of the energy or the power of the hot wire process.

Balancing the frequency of arcing against at least one of the energy or the power of the hot wire process may include keeping the frequency of arcing below a first threshold value while keeping the energy or the power above a second threshold value, in accordance with one embodiment. Monitoring the frequency of arcing includes sensing at least one of a voltage or a current of the hot wire process between the filler wire and a workpiece, in accordance with one embodiment. Monitoring the energy or the power of the hot wire process includes sensing both a voltage and a current of the hot wire process between the filler wire and a workpiece, in accordance with one embodiment. In another embodiment, monitoring the energy or the power of the hot wire process includes monitoring the voltage and current of the hotwire waveform generated by the hotwire power supply 170.

In one embodiment, the adjusting employs a control algorithm, trained using machine learning (ML) techniques and/or artificial intelligence (AI) techniques, and having inputs of the frequency of arcing and at least one of the energy or the power, as monitored, and having outputs of at least one of the hot wire current, the hot wire voltage, the hot wire waveform characteristic, the wire feed speed, the wire approach angle, or the contact tip-to-work distance. The inputs may further include at least one of a wire type of the filler wire, a wire diameter of the filler wire, a material type of a workpiece, and a material thickness of the workpiece. A visual indicator may be provided to a user based on the frequency of arcing to indicate to the user when the filler wire is in a correct location within the weld pool. The frequency of arcing may be kept between 0.5 Hz and 20 Hz during the hot wire process, in accordance with one embodiment.

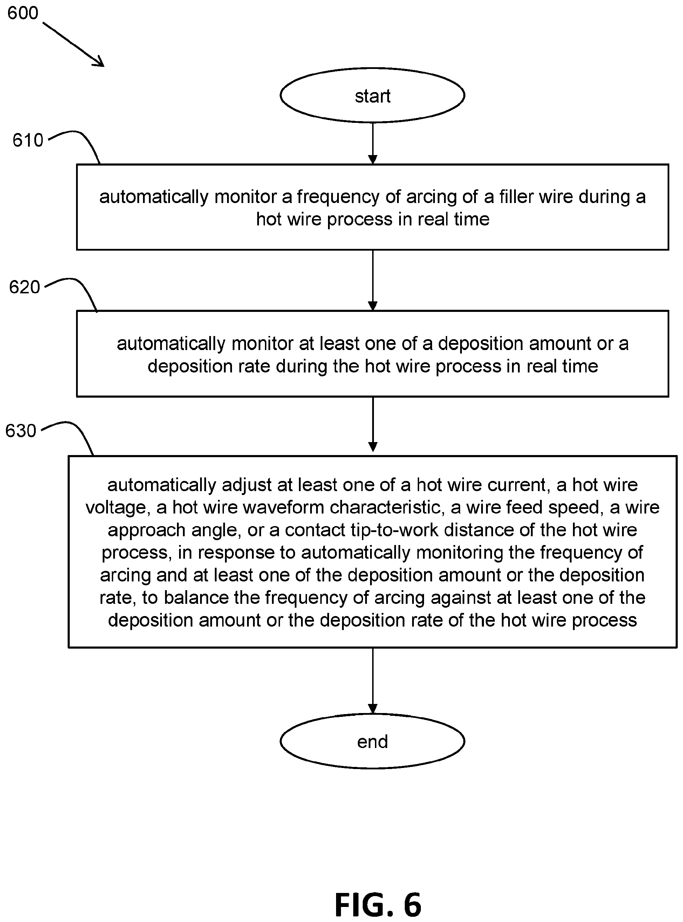

FIG. 6 illustrates a flow chart of another embodiment of a method 600 of mitigating arcing events in a hot wire process provided by a hot wire system. At block 610, the method 600 includes automatically monitoring a frequency of arcing of a filler wire during a hot wire process in real time. At block 620, the method includes automatically monitoring at least one of a deposition amount or a deposition rate during the hot wire process in real time. At block 630, the method 600 includes automatically adjusting at least one of a hot wire current, a hot wire voltage, a hot wire waveform characteristic, a wire feed speed, a wire approach angle, or a contact tip-to-work distance of the hot wire process, in response to automatically monitoring the frequency of arcing and at least one of the deposition amount or the deposition rate, to balance the frequency of arcing against at least one of the deposition amount or the deposition rate of the hot wire process.

Balancing the frequency of arcing against at least one of the deposition amount or the deposition rate of the hot wire process may include keeping the frequency of arcing below a first threshold value while keeping the deposition amount or the deposition rate above a second threshold value, in accordance with one embodiment. Monitoring the frequency of arcing includes sensing at least one of a voltage or a current of the hot wire process between the filler wire and a workpiece, in accordance with one embodiment. Monitoring the deposition amount or the deposition rate of the hot wire process includes keeping track of an arc time of the filler wire and the wire feed speed during the hot wire process, in accordance with one embodiment.

In one embodiment, the adjusting employs a control algorithm, trained using machine learning (ML) techniques and/or artificial intelligence techniques (AI), and having inputs of the frequency of arcing and at least one of the deposition amount or the deposition rate, as monitored, and having outputs of at least one of the hot wire current, the hot wire voltage, the hot wire waveform characteristic, the wire feed speed, the wire approach angle, or the contact tip-to-work distance. The inputs may further include at least one of a wire type of the filler wire, a wire diameter of the filler wire, a material type of a workpiece, and a material thickness of the workpiece. A visual indicator may be provided to a user based on the frequency of arcing to indicate to the user when the filler wire is in a correct location within the weld pool. The frequency of arcing may be kept between 0.5 Hz and 20 Hz during the hot wire process, in accordance with one embodiment.

In summary, a method of mitigating arcing events in a hot wire process is provided. The method includes monitoring an arcing frequency of a hot wire process. The method also includes monitoring at least one of an energy, a power, a deposition amount, or a deposition rate of the hot wire process. The method further includes adjusting at least one of a hot wire current, a hot wire voltage, a hot wire waveform characteristic, a wire feed speed, a wire approach angle, or a contact tip-to-work distance (CTWD) of the hot wire process to balance the arcing frequency against at least one of the energy, the power, the deposition amount, or the deposition rate of the hot wire process, where it is desirable for the arcing frequency to be low, and where it is desirable for the energy, the power, the deposition amount, or the deposition rate to be high.

Embodiments of the invention include a method of mitigating arcing events in a hot wire process provided by a hot wire system, the method comprising:
automatically monitoring a frequency of arcing of a filler wire during a hot wire process in real time;
automatically monitoring at least one of an energy or a power during the hot wire process in real time; and
automatically adjusting at least one of a hot wire current, a hot wire voltage, a hot wire waveform characteristic, a wire feed speed, a wire approach angle, or a contact tip-to-work distance of the hot wire process, in response to automatically monitoring the frequency of arcing and at least one of the energy or the power, to balance the frequency of arcing against at least one of the energy or the power of the hot wire process.

Any of the embodiments or claims disclosed herein can be combined with the previous embodiment.

Embodiments of the invention include a method of mitigating arcing events in a hot wire process provided by a hot wire system, the method comprising:
automatically monitoring a frequency of arcing of a filler wire during a hot wire process in real time;
automatically monitoring at least one of a deposition amount or a deposition rate during the hot wire process in real time; and
automatically adjusting at least one of a hot wire current, a hot wire voltage, a hot wire waveform characteristic, a wire feed speed, a wire approach angle, or a contact tip-to-work distance of the hot wire process, in response to automatically monitoring the frequency of arcing and at least one of the deposition amount or the deposition rate, to balance the frequency of arcing against at least one of the deposition amount or the deposition rate of the hot wire process.

Any of the embodiments or claims disclosed herein can be combined with the previous embodiment.

While the disclosed embodiments have been illustrated and described in considerable detail, it is not the intention to restrict or in any way limit the scope of the appended claims to such detail. It is, of course, not possible to describe every conceivable combination of components or methodologies for purposes of describing the various aspects of the subject matter. Therefore, the disclosure is not limited to the specific details or illustrative examples shown and described. Thus, this disclosure is intended to embrace alterations, modifications, and variations that fall within the scope of the appended claims. The above description of specific embodiments has been given by way of example. From the disclosure given, those skilled in the art will not only understand the general inventive concepts and attendant advantages, but will also find apparent various changes and modifications to the structures and methods disclosed. It is sought, therefore, to cover all such changes and modifications as fall within the scope of the general inventive concepts, as defined by the appended claims.

## Claims

1. A method of mitigating arcing events in a hot wire process provided by a hot wire system, the method comprising:
- automatically monitoring (520) at least one of:
∘ an energy or a power during the hot wire process in real time; or
∘ a power during the hot wire process in real time; or
∘ a deposition amount during the hot wire process in real time; or
∘ a deposition rate during the hot wire process in real time; and
**characterized by**:
- automatically monitoring (510) a frequency of arcing of a filler wire during a hot wire process in real time;
- automatically adjusting (530) at least one of a hot wire current, a hot wire voltage, a hot wire waveform characteristic, a wire feed speed, a wire approach angle, or a contact tip-to-work distance of the hot wire process, in response to automatically monitoring the frequency of arcing and at least one of the energy or the power or the deposition amount or the deposition rate, to balance the frequency of arcing against at least one of the energy or the power or the deposition amount or the deposition rate of the hot wire process.

2. The method of claim 1, wherein balancing the frequency of arcing against at least one of the energy or the power or the deposition amount or the deposition rate of the hot wire process includes keeping the frequency of arcing below a first threshold value while keeping the energy or the power or the deposition amount or the deposition rate above a second threshold value.

3. The method of claim 1 or 2, wherein the monitoring of the frequency of arcing includes sensing at least one of a voltage or a current of the hot wire process between the filler wire and a workpiece.

4. The method of any of the previous claims, wherein the monitoring of the energy or the power of the hot wire process includes sensing a voltage and a current of the hot wire process between the filler wire and a workpiece.

5. The method of any of the previous claims, wherein the monitoring of the deposition amount or the deposition rate of the hot wire process includes keeping track of an arc time of the filler wire and the wire feed speed during the hot wire process.

6. The method of any of the previous claim, wherein the adjusting employs a control algorithm (400), trained using machine learning techniques, and having inputs (410) of the frequency of arcing and at least one of the energy or the power or the deposition amount or the deposition rate, as monitored, and having outputs (420) of at least one of the hot wire current, the hot wire voltage, the hot wire waveform characteristic, the wire feed speed, the wire approach angle, or the contact tip-to-work distance.

7. The method of claim 6, wherein the inputs further include at least one of a wire type of the filler wire, a wire diameter of the filler wire, a material type of a workpiece, and a material thickness of the workpiece.

8. The method of any of the previous claims, wherein the adjusting employs a control algorithm, trained using artificial intelligence techniques, and having inputs of the frequency of arcing and at least one of the energy or the power or the deposition amount or the deposition rate, as monitored, and having outputs of at least one of the hot wire current, the hot wire voltage, the hot wire waveform characteristic, the wire feed speed, the wire approach angle, or the contact tip-to-work distance.

9. The method of claim 8, wherein the inputs further include at least one of a wire type of the filler wire, a wire diameter of the filler wire, a material type of a workpiece, and a material thickness of the workpiece.

10. The method of any of the previous claims, further comprising providing a visual indicator to a user based on the frequency of arcing to indicate to the user when the filler wire is in a correct location within the weld pool.

11. The method of any of the previous claims, wherein the frequency of arcing is kept between 0.5 Hz and 20 Hz during the hot wire process.

## Patentansprüche

1. Methode zum Abschwächen von Lichtbogenereignissen in einem Heißdrahtverfahren, bereitgestellt durch ein Heißdrahtsystem, wobei die Methode Folgendes umfasst:
- automatisches Überwachen (520) von mindestens einem von:
• einer Energie oder einer Leistung während des Heißdrahtverfahrens in Echtzeit;
oder
• einer Leistung während des Heißdrahtverfahrens in Echtzeit; oder
• einer Abscheidemenge während des Heißdrahtverfahrens in Echtzeit; oder
• einer Abscheiderate während des Heißdrahtverfahrens in Echtzeit; und
**gekennzeichnet durch**:
- automatisches Überwachen (510) einer Lichtbogenfrequenz eines Fülldrahts während eines Heißdrahtverfahrens in Echtzeit; und
- automatisches Einstellen (530) mindestens eines von einem Heißdrahtstrom, einer Heißdrahtspannung, einer Heißdraht-Wellenformcharakteristik, einer Drahtvorschubgeschwindigkeit, eines Drahtansatzwinkels oder eines Abstands zwischen Kontaktspitze und Werkstück des Heißdrahtverfahrens als Reaktion auf das automatische Überwachen der Lichtbogenfrequenz und mindestens einer von der Energie oder der Leistung oder der Abscheidemenge oder der Abscheiderate, um die Lichtbogenfrequenz gegen mindestens eine von der Energie oder der Leistung oder der Abscheidemenge oder der Abscheiderate des Heißdrahtverfahrens auszugleichen.

2. Methode nach Anspruch 1, wobei das Ausgleichen der Lichtbogenfrequenz gegen mindestens eines von der Energie oder der Leistung oder der Abscheidemenge oder der Abscheiderate des Heißdrahtverfahrens das Halten der Lichtbogenfrequenz unter einem ersten Schwellenwert beinhaltet, während die Energie oder die Leistung oder die Abscheidemenge oder die Abscheiderate über einem zweiten Schwellenwert gehalten wird.

3. Methode nach Anspruch 1 oder 2, wobei das Überwachen der Lichtbogenfrequenz das Erfassen mindestens eines von einer Spannung oder einem Strom des Heißdrahtverfahrens zwischen dem Fülldraht und einem Werkstück beinhaltet.

4. Methode nach einem der vorhergehenden Ansprüche, wobei das Überwachen der Energie oder der Leistung des Heißdrahtverfahrens das Erfassen einer Spannung und eines Stroms des Heißdrahtverfahrens zwischen dem Fülldraht und einem Werkstück beinhaltet.

5. Methode nach einem der vorhergehenden Ansprüche, wobei das Überwachen der Abscheidemenge oder der Abscheiderate des Heißdrahtverfahrens das Verfolgen einer Lichtbogenzeit des Fülldrahts und der Drahtvorschubgeschwindigkeit während des Heißdrahtverfahrens beinhaltet.

6. Methode nach einem der vorhergehenden Ansprüche, wobei das Einstellen einen Regelalgorithmus (400) einsetzt, der unter Verwendung von Techniken des maschinellen Lernens trainiert wurde, und Eingänge (410) der Lichtbogenfrequenz und mindestens einer von der Energie oder der Leistung oder der Abscheidemenge oder der Abscheiderate, wie überwacht, aufweist und Ausgänge (420) von mindestens einem von dem Heißdrahtstrom, der Heißdrahtspannung, der Heißdraht-Wellenformcharakteristik, der Drahtvorschubgeschwindigkeit, des Drahtansatzwinkels oder des Abstands zwischen Kontaktspitze und Werkstück aufweist.

7. Methode nach Anspruch 6, wobei die Eingänge ferner mindestens eines von einem Drahttyp des Fülldrahts, einem Drahtdurchmesser des Fülldrahts, einem Materialtyp eines Werkstücks und einer Materialdicke des Werkstücks beinhalten.

8. Methode nach einem der vorhergehenden Ansprüche, wobei das Einstellen einen Regelalgorithmus einsetzt, der unter Verwendung von Techniken der künstlichen Intelligenz trainiert wurde, und Eingänge der Lichtbogenfrequenz und mindestens einer von der Energie oder der Leistung oder der Abscheidemenge oder der Abscheiderate, wie überwacht, aufweist und Ausgänge von mindestens einem von dem Heißdrahtstrom, der Heißdrahtspannung, der Heißdraht-Wellenformcharakteristik, der Drahtvorschubgeschwindigkeit, des Drahtansatzwinkels oder des Abstands zwischen Kontaktspitze und Werkstück aufweist.

9. Methode nach Anspruch 8, wobei die Eingänge ferner mindestens eines von einem Drahttyp des Fülldrahts, einem Drahtdurchmesser des Fülldrahts, einem Materialtyp eines Werkstücks und einer Materialdicke des Werkstücks beinhalten.

10. Methode nach einem der vorhergehenden Ansprüche, ferner umfassend das Bereitstellen einer visuellen Anzeige für einen Benutzer basierend auf der Lichtbogenfrequenz, um dem Benutzer anzuzeigen, wenn sich der Fülldraht an einer korrekten Stelle innerhalb des Schweißbades befindet.

11. Methode nach einem der vorhergehenden Ansprüche, wobei die Lichtbogenfrequenz während des Heißdrahtverfahrens zwischen 0,5 Hz und 20 Hz gehalten wird.

## Revendications

1. Procédé d'atténuation de phénomènes d'amorçage d'arcs électriques dans un processus à fil chaud mis en œuvre par un système à fil chaud, le procédé comprenant:
- surveillance automatique (520) d'au moins l'un des éléments suivants :
∘ une énergie ou une puissance pendant le processus à fil chaud en temps réel ; ou
∘ une puissance pendant le processus à fil chaud en temps réel ; ou
∘ une quantité de dépôt pendant le processus à fil chaud en temps réel ; ou
∘ une vitesse de dépôt pendant le processus à fil chaud en temps réel ; et
**caractérisé par** :
- surveillance automatique (510) d'une fréquence d'amorçage d'arc d'un fil d'apport pendant un processus à fil chaud en temps réel ; et
- réglage automatique (530) d'au moins l'un des éléments suivants : un courant du fil chaud, une tension du fil chaud, une caractéristique de forme d'onde du fil chaud, une vitesse d'alimentation du fil, un angle d'approche du fil, ou une distance entre la pointe de contact et la pièce du processus à fil chaud, en réponse à la surveillance automatique de la fréquence d'amorçage d'arc et d'au moins l'un des éléments suivants : l'énergie ou la puissance ou la quantité de dépôt ou la vitesse de dépôt, afin d'équilibrer la fréquence d'amorçage d'arc par rapport à au moins l'un des éléments suivants : l'énergie ou la puissance ou la quantité de dépôt ou la vitesse de dépôt du processus à fil chaud.

2. Procédé selon la revendication 1, dans lequel l'équilibrage de la fréquence d'amorçage d'arc par rapport à au moins l'un des éléments suivants : l'énergie, la puissance, la quantité de dépôt ou la vitesse de dépôt, comprend le maintien de la fréquence d'amorçage d'arc en dessous d'une première valeur seuil tout en maintenant l'énergie ou la puissance ou la quantité de dépôt ou la vitesse de dépôt au-dessus d'une seconde valeur seuil.

3. Procédé selon la revendication 1 ou 2, dans lequel la surveillance de la fréquence d'amorçage d'arc comprend la détection d'au moins l'un des éléments suivants : une tension ou un courant du processus à fil chaud entre le fil d'apport et une pièce.

4. Procédé selon l'une quelconque des revendications précédentes, dans lequel la surveillance de l'énergie ou de la puissance du processus à fil chaud comprend la détection d'une tension et d'un courant du processus à fil chaud entre le fil d'apport et une pièce.

5. Procédé selon l'une quelconque des revendications précédentes, dans lequel la surveillance de la quantité de dépôt ou de la vitesse de dépôt du processus à fil chaud comprend le suivi du temps d'arc du fil d'apport et de la vitesse d'alimentation du fil pendant le processus à fil chaud.

6. Procédé selon l'une quelconque des revendications précédentes, dans lequel le réglage met en œuvre un algorithme de commande (400), entraîné à l'aide de techniques d'apprentissage automatique, et comprenant des entrées (410) de la fréquence d'amorçage d'arc et au moins l'un des éléments suivants : l'énergie, la puissance, la quantité de dépôt ou la vitesse de dépôt, tels que surveillés ; et des sorties (420) au moins de l'un des éléments suivants : le courant du fil chaud, la tension du fil chaud, la caractéristique de forme d'onde du fil chaud, la vitesse d'alimentation du fil, l'angle d'approche du fil ou la distance entre la pointe de contact et la pièce.

7. Procédé selon la revendication 6, dans lequel les entrées comprennent en outre au moins l'un des éléments suivants : un type de fil du fil d'apport, un diamètre du fil d'apport, un type de matériau de la pièce, et une épaisseur de matériau de la pièce.

8. Procédé selon l'une quelconque des revendications précédentes, dans lequel le réglage met en œuvre un algorithme de commande, entraîné à l'aide de techniques d'intelligence artificielle, et ayant en entrée la fréquence d'amorçage d'arc et au moins l'un des éléments suivants : l'énergie, la puissance, la quantité de dépôt ou la vitesse de dépôt, tels que surveillés ; et ayant en sortie au moins l'un des éléments suivants : le courant du fil chaud, la tension du fil chaud, la caractéristique de forme d'onde du fil chaud, la vitesse d'alimentation du fil, l'angle d'approche du fil ou la distance entre la pointe de contact et la pièce.

9. Procédé selon la revendication 8, dans lequel les entrées comprennent en outre au moins l'un des éléments suivants : un type de fil du fil d'apport, un diamètre du fil d'apport, un type de matériau de la pièce, et une épaisseur de matériau de la pièce.

10. Procédé selon l'une quelconque des revendications précédentes, comprenant en outre la fourniture d'un indicateur visuel à un utilisateur basé sur la fréquence d'amorçage d'arc afin d'indiquer à l'utilisateur lorsque le fil d'apport se trouve dans une position correcte dans le bain de soudure.

11. Procédé selon l'une quelconque des revendications précédentes, dans lequel la fréquence d'amorçage d'arc est maintenue entre 0,5 Hz et 20 Hz pendant le processus à fil chaud.
